# EUROPEAN PATENT APPLICATION

(11) **EP 4 840 730 A1**
(43) Date of publication of application: **18.11.2026**
(21) Application number: 26178307.0
(22) Date of filing: 12.05.2026
(51) Int. Cl.: B62D 25/08, B62D 29/00

(54) **VEHICLE STRUCTURE BODY**

(30) Priority: 14.05.2025 JP 2025081531
(71) Applicant: Toyota Jidosha Kabushiki Kaisha, Toyota-shi, Aichi-ken 471-8571 (JP)
(72) Inventor: SAEKI, Koji, TOYOTA-SHI, AICHI-KEN, 471-8571 (JP)
(74) Representative: Cabinet Beau de Loménie

(57) **Abstract**

A vehicle structure body (10) includes a vehicle framework body (11), a side member portion, and a plate member (20) fabricated of iron. The vehicle framework body (11) is integrally molded by casting. At least a portion of the side member portion is included in the vehicle framework body (11). The side member portion is open to one side of an outer side and inner side in a vehicle width direction. The side member portion includes an upper wall (14A), lower wall (14B), vertical wall (14C) and middle wall (14D) that extend in the vehicle width direction. The side member portion includes first ribs (14FA) provided between the upper wall (14A) and the middle wall (14D) that are in contact with the upper wall (14A) and the middle wall (14D), and second ribs (14FB) provided between the middle wall (14D) and the lower wall (14B) that are in contact with the middle wall (14D) and the lower wall (14B). The plate member (20) covers an opening of the side member portion at the one side in the vehicle width direction, and includes an insertion portion (21) into which a vehicle width direction end portion of the middle wall (14D) is inserted.

## Description

### BACKGROUND

### Technical Field

The present invention relates to a vehicle structure body.

### Related Art

Japanese Patent Application Laid-Open (JP-A) No. 2020-011799 discloses a vehicle structure in which a crash box is joined to a front end of a side member with a chamber shape.

### SUMMARY

Conventional side members often have a chamber shape and absorb an impact by actively buckling in response to a collision load from the vehicle front. However, a side member formed by casting often has an open chamber shape that is open to a vehicle width direction outer side, extends in the vehicle width direction and the vehicle vertical direction, and is provided with ribs that connect to an upper wall or lower wall of the side member in a plural number in the vehicle front-and-rear direction.

In this kind of side member, while absorbing an impact in response to a collision load from the vehicle front, the plural ribs are broken from the vehicle front side. However, when the impact is applied, a shape of the side member between ribs that are adjacent in the vehicle front-and-rear direction may be crushed, accelerating deformation, and the desired impact absorption effect may not be provided.

The present disclosure is made in consideration of the circumstances described above, and an object of the present disclosure is to provide a vehicle structure body that may suppress a deterioration in impact absorption performance.

A vehicle structure body according to a first aspect includes: a vehicle framework body that is integrally molded by casting; a side member portion of which at least a portion is included in the vehicle framework body, the side member portion being open to one side of an outer side or an inner side in a vehicle width direction, and the side member portion including an upper wall that extends in the vehicle width direction, a lower wall that is provided at a vehicle vertical direction lower side relative to the upper wall and extends in the vehicle width direction, a vertical wall that connects end portions of the upper wall and the lower wall at another side in the vehicle width direction, a middle wall that is provided between the upper wall and the lower wall and that projects from the vertical wall and extends to the one side in the vehicle width direction, first ribs that are provided between the upper wall and the middle wall and are in contact with the upper wall and the middle wall, and second ribs that are provided between the middle wall and the lower wall and are in contact with the middle wall and the lower wall; and a plate member fabricated of iron that covers the opening of the side member portion at the one side in the vehicle width direction, the plate member including an insertion portion into which a vehicle width direction end portion of the middle wall is inserted.

The vehicle structure body according to the first aspect is provided with the plate member fabricated of iron, which covers the opening of the side member portion and includes the insertion portion into which the vehicle width direction end portion of the middle wall is inserted. Thus, deformation of the upper wall, lower wall and middle wall may be restrained by the plate member. As a result, because loss of shape of the side member portion during a frontal collision may be suppressed, a deterioration in impact absorption performance of the side member portion may be suppressed.

In a vehicle structure body according to a second aspect, in the structure according to the first aspect, the insertion portion includes a recess portion that is open to a side thereof at which the middle wall is disposed.

In the vehicle structure body according to the second aspect, because the insertion portion includes the recessed shape of which the side opposing the middle wall is open, deformation in the vehicle vertical direction of an end portion of the middle wall at the one side may be restrained by the recess portion. As a result, vertical bending of the middle wall between neighboring first ribs and neighboring second ribs may be suppressed.

In a vehicle structure body according to a third aspect, in the structure according to the first aspect, the middle wall includes a protrusion portion that protrudes further to the one side in the vehicle width direction than at least one of the upper wall or the lower wall, and the insertion portion includes a penetrating hole into which the protrusion portion is inserted.

In the vehicle structure body according to the third aspect, displacement in the vehicle vertical direction of the protrusion portion of the middle wall, which protrudes to the one side in the vehicle width direction, may be restrained due to the protrusion portion being inserted into the penetrating hole of the insertion portion of the plate member. As a result, vertical bending of the middle wall between the neighboring first ribs and neighboring second ribs may be suppressed.

In a vehicle structure body according to a fourth aspect, in the structure according to the first aspect, the plate member includes fastening portions that are fastened to each of the upper wall and the lower wall; and the insertion portion includes a tip portion that is disposed at substantially a same position in the vehicle width direction as the fastening portions and opposes the vehicle width direction end portion of the middle wall, and floor portions that are provided at vehicle vertical direction outer sides of the tip portion, the floor portions being provided at the other side in the vehicle width direction relative to the fastening portions.

In the vehicle structure body according to the fourth aspect, the tip portion of the insertion portion is disposed at substantially the same position in the vehicle width direction as the fastening portions, and the floor portions of the insertion portion are disposed at the other side relative to the fastening portions, that is, the side thereof at which the vertical wall is disposed. Therefore, when the plate member is being fastened to the side member portion, the insertion portion presses the middle wall toward the side at which the vertical wall is disposed. Thus, deformation in the vehicle vertical direction of the end portion at the one side of the middle wall may be further restrained.

In a vehicle structure body according to a fifth aspect, in the structure according to the second aspect, the plate member is fastened to the middle wall at the insertion portion.

In the vehicle structure body according to the fifth aspect, because the plate member is fastened to the middle wall at the insertion portion, deformation in the vehicle vertical direction of the end portion at the one side of the middle wall may be further restrained.

In a vehicle structure body according to a sixth aspect, in the structure according to any one of the first to fifth aspects, the side member portion includes an upper side flange that extends to an upper side in the vehicle vertical direction from an end portion of the upper wall at the one side in the vehicle vertical direction, and a lower side flange that extends to the lower side in the vehicle vertical direction from an end portion of the lower wall at the one side in the vehicle vertical direction; and the plate member is fastened to each of the upper side flange and the lower side flange.

In the vehicle structure body according to the sixth aspect, because the plate member is respectively fastened to the upper side flange and lower side flange provided at the side member portion, assembly of the plate member to the side member portion may be made easier.

In a vehicle structure body according to a seventh aspect, in the structure according to any one of the first to sixth aspects, the plate member covers the upper wall, the lower wall and the middle wall from end portions thereof at the vehicle front side to end portions thereof at a vehicle rear side.

In the vehicle structure body according to the seventh aspect, because the plate member covers the upper wall, lower wall and middle wall from the end portions at the vehicle front side to the end portions at the vehicle rear side, a region of the side member portion that is specified as an impact absorption region, which includes the upper wall, lower wall and middle wall, is covered by the plate member. Therefore, loss of shape of the impact absorption region may be suppressed, and a deterioration in impact absorption performance of the impact absorption region of the side member portion may be suppressed.

In a vehicle structure body according to an eighth aspect, in the structure according to any one of the first to sixth aspects, the plate member covers the side member portion to rearward from a vehicle front-and-rear direction central portion of the side member portion.

In the vehicle structure body according to the eighth aspect, because the plate member extends rearward and covers the side member portion from the vehicle front-and-rear direction central portion of the side member portion, loss of shape to the rear from the central portion may be suppressed by the plate member. Therefore, the vehicle front side of the side member portion that is not covered by the plate member is more susceptible to loss of shape than the vehicle rear side of the side member portion that is covered by the plate member. As a result, the side member portion may be crushed more easily from the front side.

### ADVANTAGEOUS EFFECTS OF INVENTION

As described above, according to the vehicle structure body according to the first aspect, a deterioration in impact absorption performance of the side member portion may be suppressed.

According to the vehicle structure body according to the second aspect, vertical bending of the middle wall between the neighboring first ribs and between the neighboring second ribs may be suppressed.

According to the vehicle structure body according to the third aspect, vertical bending of the middle wall between the neighboring first ribs and between the neighboring second ribs may be suppressed.

According to the vehicle structure body according to the fourth aspect, deformation in the vehicle vertical direction of the end portion at the one side of the middle wall may be further restrained.

According to the vehicle structure body according to the fifth aspect, deformation in the vehicle vertical direction of the end portion at the one side of the middle wall may be further restrained.

According to the vehicle structure body according to the sixth aspect, assembly of the plate member and the side member portion may be made easier.

According to the vehicle structure body according to the seventh aspect, a deterioration in impact absorption performance of the impact absorption region of the side member portion may be suppressed.

According to the vehicle structure body according to the eighth aspect, the side member portion may be crushed more easily from the front side.

### BRIEF DESCRIPTION OF THE DRAWINGS

Exemplary embodiments of the present disclosure will be described in detail based on the following figures, wherein:
Fig. 1 is a perspective view schematically showing an example of principal portions of a vehicle front portion, which is a view in which a vehicle in which a vehicle structure body according to a first exemplary embodiment is employed is seen diagonally from a front-left side.
Fig. 2 is a side view schematically showing principal portions of the vehicle in Fig. 1.
Fig. 3 is a perspective view in which a front side member in Fig. 1 is seen diagonally from the front-left side.
Fig. 4 is a vertical sectional diagram in front view of the front side member and a plate member.
Fig. 5 is a magnified vertical sectional diagram of an insertion portion in Fig. 4.
Fig. 6 is a side view showing a state of Fig. 2 in which a plate member has been mounted.
Fig. 7 is a perspective view in which principal portions of a front side member of a vehicle structure body according to a second exemplary embodiment are seen diagonally from the front-left side.
Fig. 8 is a vertical sectional diagram of a front view of the front side member and a plate member of the vehicle structure body according to the second exemplary embodiment.
Fig. 9 is a vertical sectional diagram of a front view of a front side member and plate member of a vehicle structure body according to a third exemplary embodiment.
Fig. 10 is a vertical sectional diagram of a front view of a front side member and plate member of a vehicle structure body according to a fourth exemplary embodiment.
Fig. 11 is a side view corresponding to Fig. 6, showing a variant example of the state in which the plate member has been mounted.

### DETAILED DESCRIPTION

### = First Exemplary Embodiment =

Below, a vehicle 12 in which a vehicle structure body 10 according to a first exemplary embodiment of the present disclosure is employed is described with reference to the drawings. In the present specification and drawings, structural elements with substantially the same functional structures are assigned the same reference symbols, and duplicative descriptions thereof are omitted accordingly. The arrow FR that is shown where appropriate in the drawings indicates a front side in a vehicle front-and-rear direction and the arrow UP indicates an upper side in a vehicle vertical direction. The arrow LH indicates a vehicle width direction left side, indicating a vehicle width direction outer side in the present exemplary embodiment. Where descriptions are given below simply using the directions front, rear, upper, lower, left, right, inner side and outer side, unless otherwise specified, these represent the front and rear in the vehicle front-and-rear direction, upper and lower in the vehicle vertical direction, left and right in the vehicle left-and-right direction (vehicle width direction), and an inner side and outer side in the vehicle width direction.

Unless particularly specified in this Description, each element is not limited to being a single element but may be plurally provided. In the drawings, the same reference symbol is assigned to elements that are substantially the same, and duplicative descriptions are omitted from the Description.

### - General structure of the vehicle front portion -

First, the vehicle 12 in which the vehicle structure body 10 according to the first exemplary embodiment is employed is described. For example, the vehicle 12 includes a power unit with a motor and engine or the like as a drive source, and is an electric vehicle or a fuel cell vehicle that runs on power generated by the power unit.

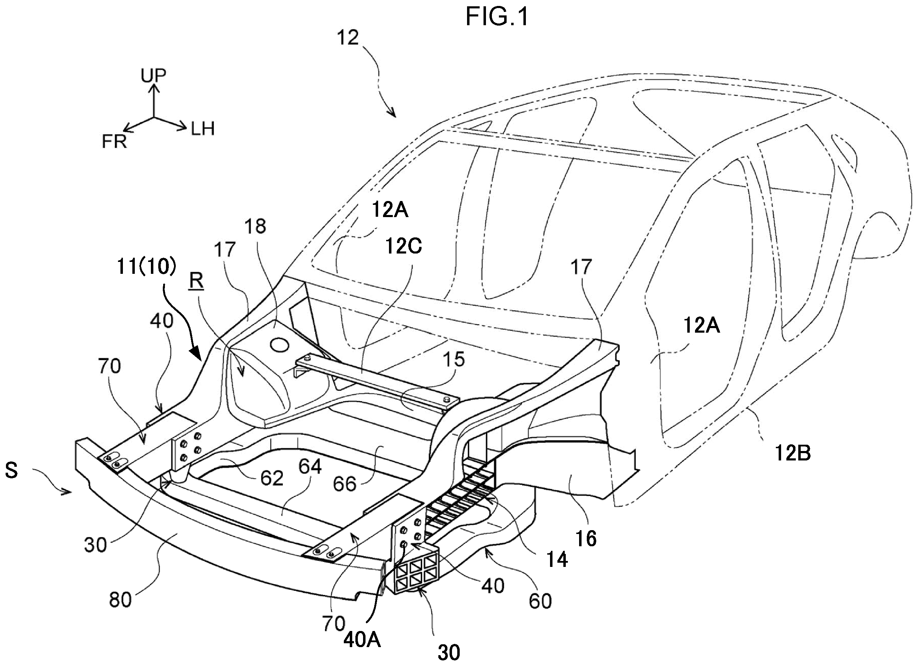

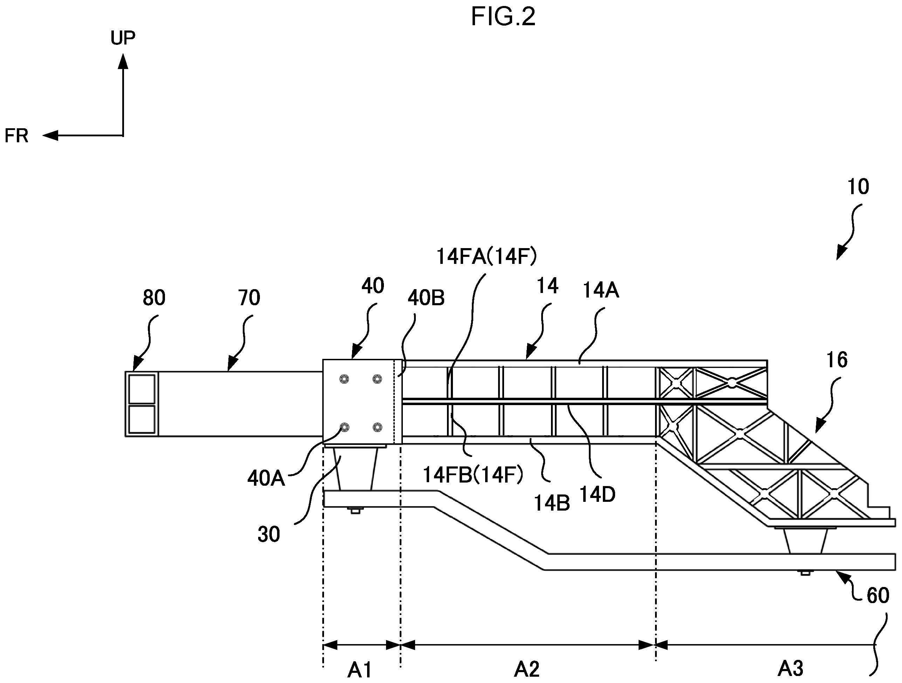

Fig. 1 is a perspective view in which the vehicle 12 is seen diagonally from the front-left side, and Fig. 2 is a side view schematically showing principal portions of the vehicle 12 in Fig. 1. In Fig. 1, principal portions of a framework of the front portion of the vehicle 12 are schematically shown. As shown in Fig. 1 and Fig. 2, the vehicle structure body 10, a suspension member 60, a bumper reinforcement 80 and the like are provided at the front portion of the vehicle 12 to serve as framework portions of the vehicle 12.

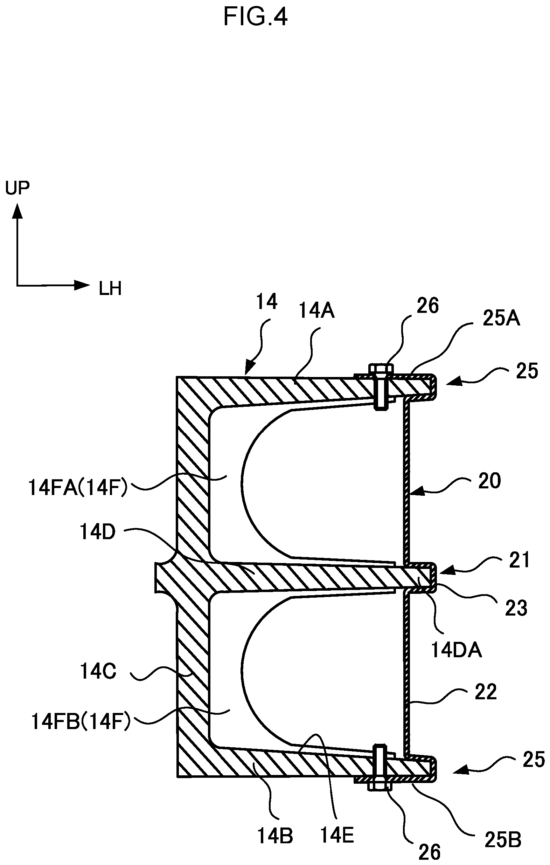

The vehicle structure body 10 is provided with a vehicle framework body 11, a front side member 14 and a plate member 20. The vehicle framework body 11 is integrally molded by casting. The front side member 14 is a side member portion included in the vehicle framework body 11. The plate member 20 (see Fig. 4) covers openings of the front side member 14, which are described below.

The front side member 14 is provided at each of two side portions in the vehicle width direction of the vehicle front portion, extending in the vehicle front-and-rear direction. The power unit, which is not shown in the drawings, is disposed between the left and right front side members 14. The power unit is supported from the lower side thereof by the suspension member 60. The suspension member 60 is disposed at the vehicle lower side of each of the left and right front side members 14. Front end portions and rear end portions of the suspension members 60 are attached to the left and right front side members 14 from the lower sides thereof at two end portions in the vehicle width direction. Thus, the left and right pair of front side members 14 support the suspension members 60 from the vehicle lower side.

At an end portion at the vehicle front side of each of the left and right front side members 14, a crash box 70 that is capable of absorbing impact energy from a load in an axial direction projects to the vehicle front side from the front side member 14. The bumper reinforcement 80, which is a framework portion of a front bumper, extends in the vehicle width direction at the front ends of the left and right crash boxes 70.

Wheel wells 16 in which vehicle wheels (not shown in the drawings) are disposed are provided at the respective rear sides of the left and right front side members 14. The wheel well 16 at the right side and the wheel well 16 at the left side are linked by a cross member 15.

An apron upper member 17 is disposed at the upper side in the vehicle vertical direction at the outer side in the vehicle width direction of each front side member 14. The apron upper member 17 is a framework portion that structures the framework to the side of an upper portion of the front portion of the vehicle 12. The apron upper member 17 extends in the vehicle front-and-rear direction along the front side member 14. A rear end portion of the apron upper member 17 is joined to a front pillar 12A. A suspension tower portion 18 is formed integrally with the apron upper member 17. A rocker 13 that extends in the vehicle front-and-rear direction and structures the framework of a vehicle body side portion is provided at the rear side in the vehicle front-and-rear direction of the wheel well 16.

As an example in the present exemplary embodiment, the vehicle framework body 11 includes the left and right front side members 14, the left and right wheel wells 16, the cross member 15, the apron upper members 17 and the suspension tower portions 18, and the vehicle framework body 11 is integrally molded by casting of a material such as an aluminium alloy, a magnesium alloy or the like. Accordingly, the respective members-the left and right wheel wells 16, the cross member 15, the apron upper members 17 and the suspension tower portions 18-have open cross sections that are open in directions of release from a die at the time of casting.

In the present exemplary embodiment, the die release directions may be to one side and to the other side in the vehicle width direction. Thus, cross sections of the respective members are open cross sections that are open to at least one of an inner side and an outer side in the vehicle width direction. Although not shown in the drawings, in practice the outer side (left side) of the wheel well 16 at the left in Fig. 1 is open as illustrated in Fig. 2. Alternatively, some or all of the left and right wheel wells 16, cross member 15, apron upper members 17 and suspension tower portions 18 of the vehicle framework body 11 may be formed as separate components.

Principal portions of the structures of each front side member 14, plate member 20, suspension tower portion 18, suspension member 60 and bumper reinforcement 80 are described in detail below.

### - Front side member -

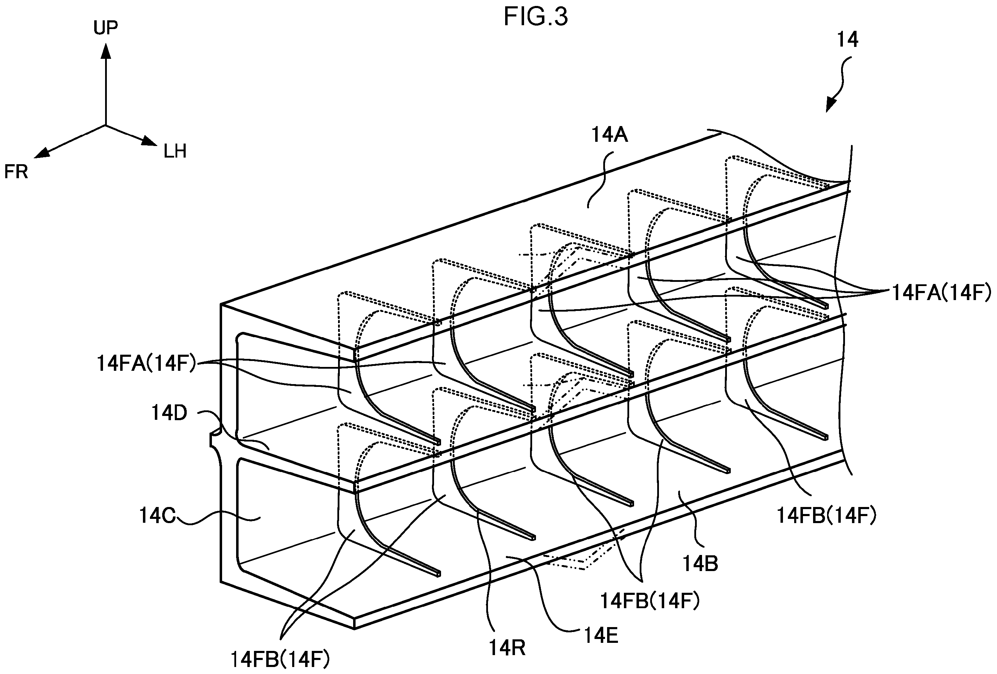

Fig. 3 is a perspective view in which the front side member 14 in Fig. 1 is seen diagonally from the front-left side. As shown in Fig. 3, the front side member 14 extends in the vehicle front-and-rear direction as mentioned above. The front side member 14 includes an upper wall 14A, a lower wall 14B, a vertical wall 14C and a middle wall 14D. The front side member 14 has an open cross section in a substantial letter-E shape that is open to the vehicle width direction outer side. In the present exemplary embodiment, an opening 14E is provided at the vehicle width direction outer side of the front side member 14. The opening 14E includes an opening formed between the upper wall 14A and the middle wall 14D and an opening formed between the middle wall 14D and the lower wall 14B.

The upper wall 14A extends in the vehicle width direction and the vehicle front-and-rear direction, structuring an upper wall of the front side member 14. The lower wall 14B is disposed to be separated to the lower side in the vehicle vertical direction from the upper wall 14A and extends in the vehicle width direction and the vehicle front-and-rear direction, structuring a lower wall of the front side member 14.

The vertical wall 14C structures an inner wall that connects a vehicle width direction inner side end portion of the upper wall 14A with a vehicle width direction inner side end portion of the lower wall 14B. The middle wall 14D is provided between the upper wall 14A and the lower wall 14B. The middle wall 14D protrudes from a central portion in the vehicle vertical direction of the vertical wall 14C and extends to the vehicle width direction outer side. The middle wall 14D partitions the interior space of the front side member 14 into two ranks, upper and lower.

Ribs 14F are provided in plural numbers in the vehicle front-and-rear direction in each of the upper and lower ranks of the front side member 14 that are divided by the middle wall 14D. The plural ribs 14F are respectively provided standing from, for example, an outer side face of the vertical wall 14C. The interior space of each rank is partitioned into plural chamber portions by the plural ribs 14F. Thus, the open cross section of the front side member 14 is reinforced by the plural ribs 14F.

In the present exemplary embodiment, the ribs 14F that are provided are first ribs 14FA, which are provided between the upper wall 14A and the middle wall 14D and connect the upper wall 14A with the middle wall 14D, and second ribs 14FB, which are provided between the middle wall 14D and the lower wall 14B and connect the middle wall 14D with the lower wall 14B. In the present exemplary embodiment, positions in the vehicle front-and-rear direction of the first ribs 14FA that are provided in a row at the upper side match up with positions in the vehicle front-and-rear direction of the second ribs 14FB that are provided in a row at the lower side. As an example, the ribs 14F are provided with cutout portions 14R that are hollowed out in circular arc shapes with distal ends oriented from the outer side toward the inner side in the vehicle width direction.

As an example in the present exemplary embodiment, end portions of the upper wall 14A, lower wall 14B and middle wall 14D at the vehicle width direction outer side are disposed substantially linearly in the vehicle vertical direction.

The meaning of the term "connect" as used in the present exemplary embodiment is intended to encompass, in contrast to a state in which separate bodies are joined to one another, a state in which the bodies are formed integrally. That is, in the front side member 14 according to the present exemplary embodiment, the upper wall 14A, lower wall 14B, vertical wall 14C, middle wall 14D and ribs 14F are integrally formed.

In the front side member 14 that is structured as described above, the upper wall 14A, middle wall 14D and lower wall 14B structure the plural chamber portions that are formed between neighboring the ribs 14F in each of the upper and lower ranks of the front side member 14. When an impact load is applied to the front side member 14 from the vehicle front side, as illustrated by the two-dot chain lines in Fig. 3, the upper wall 14A, middle wall 14D and lower wall 14B deform in the vertical direction and fracture sequentially from the vehicle front side, generating destruction loads. The impact load is absorbed by this process.

As shown in Fig. 1 and Fig. 2, a connection portion 40 is formed at an end portion at the vehicle front side of the front side member 14. An end portion at the vehicle rear side of the crash box 70 is connected at the connection portion 40. The connection portion 40 is a high-stiffness portion with a higher stiffness than other regions of the front side member 14, at which the front side member 14 is joined to the crash box 70. In the present exemplary embodiment, the front side member 14 and connection portion 40 are formed integrally by casting, but the same may be structured as separate bodies.

As an example, the vehicle front side and vehicle upper side of the connection portion 40 are open, and the end portion at the vehicle rear side of the crash box 70 is inserted into the connection portion 40 from the vehicle upper side and connected. The connection portion 40 and the crash box 70 are fastened together by fastening members 40A. Each fastening member 40A is structured by, for example, a weld nut that is welded inside the crash box 70 and a bolt that penetrates through a vehicle width direction wall of the connection portion 40 and an outer side face of the crash box 70 and is screwed into the weld nut.

A dividing wall 40B is provided between the connection portion 40 and the front side member 14. The dividing wall 40B opposes a rear end face at the vehicle rear side of the crash box 70. The rear end face at the vehicle rear side of the crash box 70 abuts against a front face of the dividing wall 40B. The upper wall 14A, lower wall 14B, vertical wall 14C and middle wall 14D each project toward the vehicle rear side from a rear end face of the dividing wall 40B.

Thus, side face portions at both sides of the crash box 70 in the vehicle width direction are joined to the end portion at the vehicle front side of the front side member 14 via the connection portion 40. A structure in which the crash box 70 and the front side member 14 are joined by welding without the connection portion 40 being interposed is also applicable.

A joining portion 30 is provided at a lower face of the connection portion 40. The joining portion 30 joins the front side member 14 to the suspension member 60. The joining portion 30 is formed integrally with the lower face of the connection portion 40 and protrudes to the vehicle lower side. In the present exemplary embodiment, the joining portion 30 is formed integrally with the front side member 14 (the connection portion 40) by casting. Accordingly, the joining portion 30 has an open cross section that is open to the vehicle width direction outer side (see Fig. 1).

In respect of the front side member 14 and the joining portion 30 being integrally formed by casting, it is sufficient that the joining portion 30 has a structure with an open cross section that is open to at least one side in the vehicle width direction. Therefore, the joining portion may have a structure with an open cross section that is open to the vehicle width direction inner side. A structure that is open to both sides in the vehicle width direction is also applicable. Alternatively, although not shown in the drawings, the joining portion 30 may have a structure with an open cross section that is open to one or both sides in the vehicle front-and-rear direction.

In the front side member 14 structured as described above, as shown in Fig. 2, a region from the front end face of the connection portion 40 to the rear end face of the dividing wall 40B formed between the connection portion 40 and the front side member 14 serves as a connection region A1, and a region that extends linearly in the vehicle front-and-rear direction from the rear end face of the dividing wall 40B serves as an impact absorption region A2. More specifically, the impact absorption region A2 is a region in which the upper wall 14A, the lower wall 14B, the middle wall 14D and the ribs 14F (the first ribs 14FA and second ribs 14FB) are located. A wheel arch region A3 is formed to the rear side from an endpoint of the impact absorption region A2.

### - Plate member -

The plate member 20 is fabricated of iron, has a long, narrow shape extending in the vehicle front-and-rear direction, and covers the opening 14E of the front side member 14 described above at the vehicle width direction outer side thereof. Fig. 4 is a vertical sectional diagram in front view of the front side member 14 and the plate member 20. As shown in Fig. 4, the plate member 20 is provided with an insertion portion 21, into which a vehicle width direction end portion 14DA of the middle wall 14D is inserted. That is, the plate member 20 is provided with the insertion portion 21 at a middle portion thereof in the vehicle vertical direction.

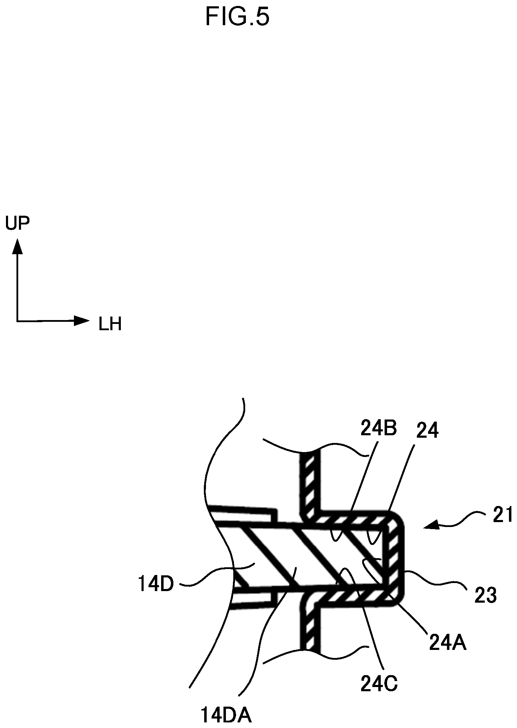

Fig. 5 is a magnified vertical sectional diagram in which the insertion portion 21 in Fig. 4 is magnified. As shown in Fig. 5, the insertion portion 21 has a recess shape that is open to the side thereof at which the middle wall 14D is disposed. More specifically, the plate member 20 is provided with main body portions 22 and a tip portion 23. Each main body portion 22 has a long, narrow rectangular shape in which the plate member 20 is formed to be flat. The tip portion 23 is formed so as to have a substantially rectangular shape in front view by, for example, bending or the like. The tip portion 23 projects to the vehicle width direction outer side from the main body portions 22. An end portion at the vehicle width direction outer side of the tip portion 23 is formed to be substantially flat. At the vehicle width direction inner side, the tip portion 23 includes a recess portion 24 that is open to the side at which the middle wall 14D is disposed. The recess portion 24 is formed of a floor face 24A, an upper face 24B and a lower face 24C. The floor face 24A opposes the end portion 14DA of the middle wall 14D.

In the present exemplary embodiment, the recess portion 24 grips the end portion 14DA of the middle wall 14D. That is, the floor face 24A, upper face 24B and lower face 24C of the recess portion 24 are each in contact with the end portion 14DA of the middle wall 14D. Although the floor face 24A, upper face 24B and lower face 24C of the recess portion 24 are each in contact with the end portion 14DA of the middle wall 14D in the present exemplary embodiment, the present invention is not limited thus. The floor face 24A, upper face 24B and lower face 24C need not be in contact with the end portion 14DA of the middle wall 14D; just one face or just two of the faces may be in contact.

Returning to Fig. 4, the vehicle width direction outer side face of each main body portion 22 of the plate member 20 is disposed at the vehicle width direction inner side relative to vehicle width direction outer side end faces of the upper wall 14A, lower wall 14B and middle wall 14D. An upper portion and lower portion in the vehicle vertical direction of the plate member 20 include fastening portions 25 that are fastened to, respectively, the upper wall 14A and the lower wall 14B. In the present exemplary embodiment, each fastening portion 25 is formed by, for example, bending or the like so as to form a substantially rectangular shape in front view. That is, the fastening portions 25 are folded back so as to enclose, respectively, the upper wall 14A and the lower wall 14B.

The fastening portion 25 at the upper side is provided with an upper projection portion 25A at which an upper end portion of the plate member 20 is folded back along an upper face of the upper wall 14A. The distal end of the upper projection portion 25A is disposed at the vehicle width direction inner side relative to the main body portion 22. Fastening members 26 such as bolts or the like are employed to fix the upper projection portion 25A to the upper wall 14A from the upper side thereof.

Similarly, the fastening portion 25 at the lower side is provided with a lower projection portion 25B at which a lower end portion of the plate member 20 is folded back along a lower face of the lower wall 14B. The distal end of the lower projection portion 25B is disposed at the vehicle width direction inner side relative to the main body portion 22. The fastening members 26 that are bolts or the like are employed to fix the lower projection portion 25B to the lower wall 14B from the lower side thereof.

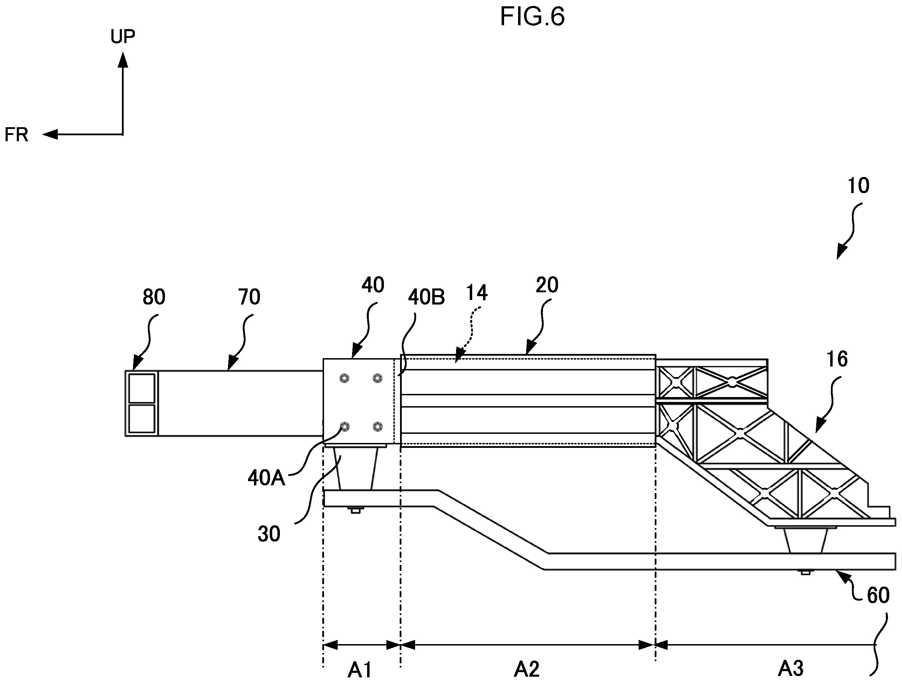

Fig. 6 is a side view showing a state of Fig. 2 in which the plate member 20 has been mounted. As shown in Fig. 6, as an example in the present exemplary embodiment, the plate member 20 is attached so as to cover the whole of the impact absorption region A2. That is, the plate member 20 covers the upper wall 14A, lower wall 14B and vertical wall 14C, at the vehicle width direction outer side, from the end portions thereof at the vehicle front side to the end portions thereof at the vehicle rear side. The plate member 20 is attached to the front side member 14 by the plural fastening members 26 with predetermined intervals in the vehicle front-and-rear direction.

### - Suspension tower -

As shown in Fig. 1, the suspension tower portions 18 are provided standing from upper faces of the pair of front side members 14. Each suspension tower portion 18 spans between the front side member 14 and the apron upper member 17. The front side member 14, apron upper member 17 and suspension tower portion 18 are formed integrally. An upper end portion of a shock absorber of the suspension, which is not shown in the drawings, is fixed to the suspension tower portion 18.

A suspension tower bar 12C spans between the pair of suspension tower portions 18. The suspension tower bar 12C extends in the vehicle width direction. Vehicle width direction end portions of the suspension tower bar 12C are fixed to upper portions of the suspension tower portions 18 via brackets or the like. Thus, the pair of suspension tower portions 18 are linked in the vehicle width direction by the suspension tower bar 12C.

### - Suspension member -

As shown in Fig. 1 and Fig. 2, the suspension member 60 includes a pair of side rails 62 and a front cross member 64. The side rails 62 extend in the vehicle front-and-rear direction and are disposed to be spaced apart in the vehicle width direction. The front cross member 64 links end portions at the vehicle front side of the pair of side rails 62 in the vehicle width direction. The suspension member 60 also includes a rear cross member 66 that links portions at the vehicle rear side of the pair of side rails 62 in the vehicle width direction. In the suspension member 60, for example, the respective portions of the pair of side rails 62, the front cross member 64 and the rear cross member 66 are formed integrally, and the respective portions have open cross sections with substantial letter-E shapes that are open to the vehicle lower side. Therefore, the suspension member 60 may be formed by casting using a die with a release direction in the vehicle vertical direction. However, the suspension member 60 is not necessarily integrally molded.

End portions in the vehicle width direction of a front end portion and a rear end portion of the suspension member 60 are mounted at the front side members 14. The front end portion of the suspension member 60 is fixed to the front side members 14 via the joining portions 30. The front end portion of the suspension member 60 includes end portions at the vehicle front side of the pair of side rails 62, which are vehicle width direction end portions of the front cross member 64. As an example, fastening members or the like are employed to join the joining portions 30 to the suspension member 60.

### - Bumper reinforcement -

The bumper reinforcement 80 is a hollow beam-shaped framework member that extends in the vehicle width direction. The bumper reinforcement 80 is connected in a state in which vehicle width direction outer side end portions of the bumper reinforcement 80 project to the vehicle width direction outer sides beyond the vehicle front side end portions of the crash boxes 70. In plan view, the bumper reinforcement 80 curves gently such that a vehicle width direction middle portion thereof protrudes to the vehicle front side.

### - Operation and Effects -

Now, operation and effects of the first exemplary embodiment are described.

The vehicle structure body 10 according to the first exemplary embodiment is provided with the plate member 20 fabricated of iron that covers the opening 14E of each front side member 14 and that includes the insertion portion 21 into which the vehicle width direction end portion 14DA of the middle wall 14D is inserted. Thus, deformation of the upper wall 14A, lower wall 14B and middle wall 14D may be restrained by the plate member 20. As a result, loss of shape of the front side member 14 during a frontal collision may be suppressed, and a deterioration in impact absorption performance of the front side member 14 may be suppressed.

In the vehicle structure body 10 according to the first exemplary embodiment, because the insertion portion 21 has the recessed shape that is open to the side at which the middle wall 14D is disposed, deformation in the vehicle vertical direction of the vehicle width direction end portion 14DA of the middle wall 14D may be restrained by the recess portion 24. As a result, vertical bending of the middle wall 14D between the neighboring first ribs 14FA and between the neighboring second ribs 14FB may be suppressed

In the vehicle structure body 10 according to the first exemplary embodiment, because the plate member 20 covers the upper wall 14A, lower wall 14B and middle wall 14D from the end portions at the vehicle front side to the end portions at the vehicle rear side, the impact absorption region A2 of the front side member 14, which includes the upper wall 14A, lower wall 14B and middle wall 14D, is covered by the plate member 20. Therefore, loss of shape of the impact absorption region A2 may be suppressed, and a deterioration in impact absorption performance of the impact absorption region A2 of the front side member 14 may be suppressed.

### = Second Exemplary Embodiment =

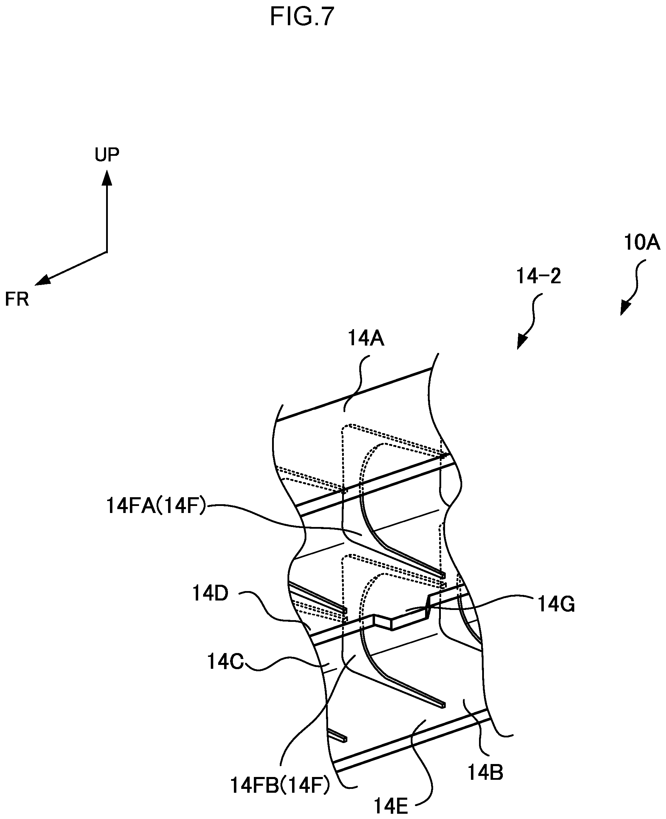

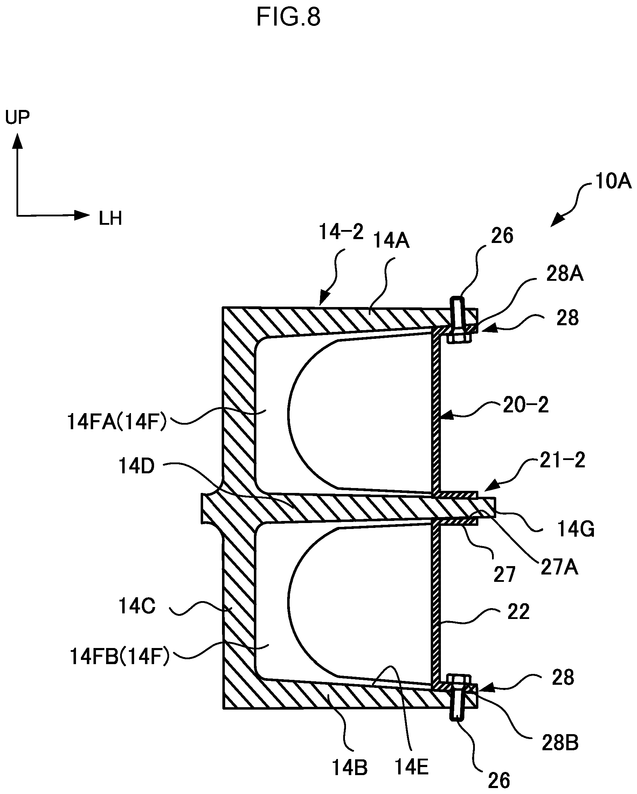

Now, a vehicle structure body 10A according to a second exemplary embodiment of the present invention is described. Fig. 7 is a perspective view in which principal portions of a front side member 14-2 of the vehicle structure body 10A according to the second exemplary embodiment are seen diagonally from the front-left side. Fig. 8 is a vertical sectional diagram of a front view of the front side member 14-2 and a plate member 20-2 of the vehicle structure body 10A according to the second exemplary embodiment. Structural portions of the vehicle structure body 10A according to the second exemplary embodiment that are similar to the above descriptions of the first exemplary embodiment are assigned the same reference symbols and are not described here.

As shown in Fig. 7, the front side member 14-2 according to the second exemplary embodiment is provided with a protrusion portion 14G that protrudes to the vehicle width direction outer side from the middle wall 14D of the front side member 14 according to the first exemplary embodiment described above. The protrusion portion 14G protrudes to the outer side from the end portion at the vehicle width direction outer side of the middle wall 14D. A vehicle width direction outer side end portion of the protrusion portion 14G is disposed at the outer side relative to the vehicle width direction outer side end portions of the upper wall 14A and the lower wall 14B. The protrusion portion 14G is formed in, for example, a trapezoid shape in plan view, tapering to the vehicle width direction outer side.

As shown in Fig. 8, the plate member 20-2 is provided with an insertion portion 21-2 into which the protrusion portion 14G at the vehicle width direction end portion of the middle wall 14D is inserted. That is, the plate member 20-2 is provided with the insertion portion 21-2 at a middle portion in the vehicle vertical direction.

The insertion portion 21-2 includes a penetrating hole 27A into which the protrusion portion 14G is inserted. More specifically, the plate member 20-2 is provided with the main body portions 22 and a substantially square tube-shaped protrusion portion 27. Each main body portion 22 has the long narrow rectangular shape in which the plate member 20-2 is formed to be flat. The protrusion portion 27 is formed so as to have a substantially rectangular shape in front view by, for example, bending or the like and protrudes to the vehicle width direction outer side from the main body portions 22. The protrusion portion 27 is formed such that the vehicle width direction outer side end portion thereof is at the same position in the vehicle width direction as the vehicle width direction outer side end portions of the upper wall 14A and lower wall 14B. The penetrating hole 27A is formed to penetrate in the vehicle width direction inside the protrusion portion 27. The penetrating hole 27A is formed in a square shape into which the protrusion portion 14G can be inserted. The protrusion portion 14G is inserted into the protrusion portion 27 when the plate member 20-2 covers the opening 14E of the front side member 14 at the vehicle width direction outer side. If the protrusion portion 27 is not formed in a tube shape but in a shape with a wall at the distal end thereof, the penetrating hole 27A is formed in this wall.

The vehicle width direction outer side face of each main body portion 22 of the plate member 20-2 is disposed at the vehicle width direction inner side relative to the vehicle width direction outer side end faces of the upper wall 14A, lower wall 14B and middle wall 14D. An upper portion and lower portion in the vehicle vertical direction of the plate member 20-2 include fastening portions 28 that are fastened to, respectively, the upper wall 14A and the lower wall 14B. In the present exemplary embodiment, each fastening portion 28 is folded back toward the vehicle width direction outer side from the main body portion 22 by, for example, bending or the like. That is, the fastening portions 28 are folded back so as to enclose, respectively, the lower face of the upper wall 14A and the upper face of the lower wall 14B.

The fastening portion 28 at the upper side is provided with an upper projection portion 28A at which an upper end portion of the plate member 20-2 is folded back along the lower face of the upper wall 14A. The distal end of the upper projection portion 28A is disposed at the same position in the vehicle width direction as the vehicle width direction outer side end portion of the upper wall 14A. The fastening members 26 that are bolts or the like are employed to fix the upper projection portion 28A to the upper wall 14A from the lower side thereof.

Similarly, the fastening portion 28 at the lower side is provided with a lower projection portion 28B at which a lower end portion of the plate member 20-2 is folded back along the upper face of the lower wall 14B. The distal end of the lower projection portion 28B is disposed at the same position in the vehicle width direction as the vehicle width direction outer side end portion of the lower wall 14B. The fastening members 26 that are bolts or the like are employed to fix the lower projection portion 28B to the lower wall 14B from the upper side thereof.

### - Operation and Effects -

Now, operation and effects of the second exemplary embodiment are described.

In the vehicle structure body 10A according to the second exemplary embodiment, displacement of the protrusion portion 14G of the middle wall 14D in the vehicle vertical direction may be restrained by the protrusion portion 14G that protrudes to the vehicle width direction outer side being inserted into the penetrating hole 27A of the insertion portion 21-2 of the plate member 20-2. As a result, vertical bending of the middle wall 14D between the neighboring first ribs 14FA and between the neighboring second ribs 14FB may be suppressed

In the second exemplary embodiment, the upper wall 14A and the lower wall 14B are formed such that widths thereof in the vehicle width direction are the same. If, however, the widths are not the same, it is sufficient that the protrusion portion 14G protrudes further in the vehicle width direction than one or other of the upper wall 14A and lower wall 14B.

### =Third Exemplary Embodiment =

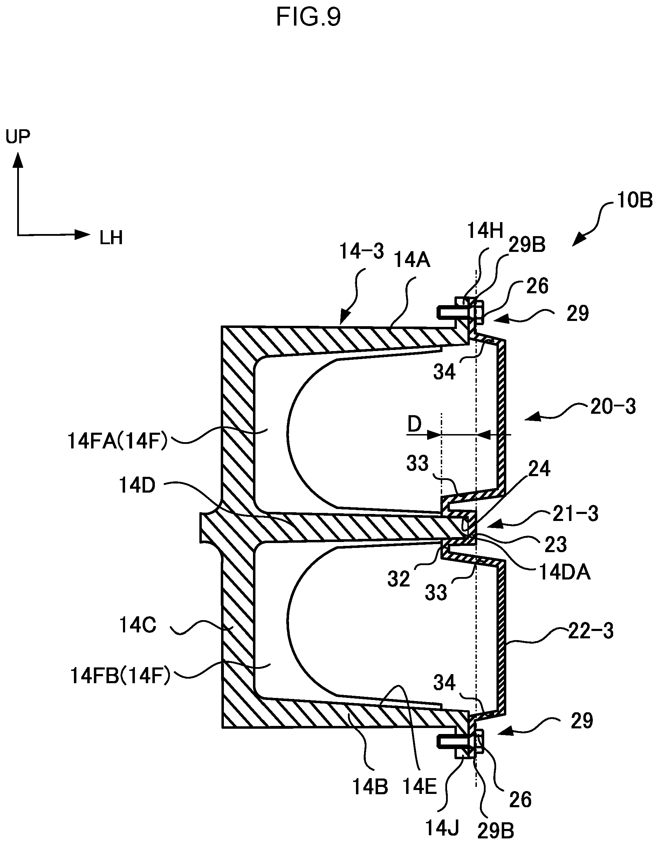

Now, a vehicle structure body 10B according to a third exemplary embodiment of the present invention is described. Fig. 9 is a vertical sectional diagram of a front view of a plate member 20-3 of a front side member 14-3 of the vehicle structure body 10B according to the third exemplary embodiment. Structural portions of the vehicle structure body 10B according to the third exemplary embodiment that are similar to the above descriptions of the first exemplary embodiment are assigned the same reference symbols and are not described here.

As shown in Fig. 9, in the front side member 14-3 according to the third exemplary embodiment, the upper wall 14A of the front side member 14 according to the first exemplary embodiment described above is provided with an upper side flange 14H, and the lower wall 14B is provided with a lower side flange 14J. The upper side flange 14H extends to the upper side from the vehicle width direction outer side end portion of the upper wall 14A, and the lower side flange 14J extends to the lower side from the vehicle width direction outer side end portion of the lower wall 14B.

The plate member 20-3 according to the third exemplary embodiment is provided, at the middle portion in the vehicle vertical direction, with an insertion portion 21-3 into which the end portion 14DA at the vehicle width direction end portion of the middle wall 14D is inserted. Similarly to the insertion portion 21 according to the first exemplary embodiment, the insertion portion 21-3 is provided with the tip portion 23 and the recess portion 24.

Vehicle width direction outer side faces of main body portions 22-3 according to the third exemplary embodiment are disposed at the vehicle width direction outer side relative to the vehicle width direction outer side end faces of the upper wall 14A, lower wall 14B and middle wall 14D. More specifically, the plate member 20-3 is provided with floor portions 32 that extend in the vehicle vertical direction from vehicle width direction inner side end portions of the recess portion 24. Each floor portion 32 is connected with the main body portion 22-3 by an oblique portion 33 that extends diagonally to the vehicle width direction outer side from a vehicle vertical direction outer side end portion of the floor portion 32.

Oblique portions 34 extend diagonally toward the front side member 14 from vehicle vertical direction outer side end portions of the main body portions 22-3. Fastening portions 29 according to the third exemplary embodiment are each provided with a plate side flange 29B that extends in the vehicle vertical direction from a distal end of the respective oblique portion 34. The plate side flanges 29B are formed such that vehicle width direction inner side faces thereof oppose, respectively, the upper side flange 14H and the lower side flange 14J.

In a state in which the plate side flanges 29B are superposed with, respectively, the upper side flange 14H and the lower side flange 14J, the fastening portions 29 at the upper side and the lower side are fixed to, respectively, the upper wall 14A and the lower wall 14B using the fastening members 26 that are bolts or the like.

The insertion portion 21-3 according to the present third exemplary embodiment is at substantially the same position as the fastening portions 29 in the vehicle width direction. More specifically, as an example, the tip portion 23 of the insertion portion 21-3 is disposed at substantially the same position as the vehicle width direction outer side face of each plate side flange 29B in the vehicle width direction. A vehicle width direction inner side face of each floor portion 32 is disposed a distance D to the vehicle width direction inner side, that is, to the side at which the vertical wall 14C is disposed, relative to the vehicle width direction outer side face of the tip portion 23. In the present exemplary embodiment, the insertion portion 21-3 is described as being at substantially the same position as the fastening portions 29 in the vehicle width direction, but the term "substantially the same position" does not necessarily mean a state in which those positions exactly match, and encompasses states in which the positions are offset within a range that enables the effects of the invention.

### - Operation and Effects -

Now, operation and effects of the third exemplary embodiment are described.

In the vehicle structure body 10B according to the third exemplary embodiment, The tip portion 23 of the insertion portion 21-3 is disposed at substantially the same position as the fastening portions 29 in the vehicle width direction, and the floor portions 32 of the insertion portion 21-3 are disposed at the other side relative to the fastening portions 29, that is, at the side at which the vertical wall 14C is disposed. Therefore, when the plate member 20-3 is being fastened to the front side member 14-3, the insertion portion 21-3 presses the middle wall 14D toward the side at which the vertical wall 14C is disposed. Thus, deformation in the vehicle vertical direction of the end portion 14DA at the vehicle width direction outer side of the middle wall 14D may be further restrained. Because regions in which the middle wall 14D and the plate member 20-3 are superposed in the vertical direction (are in contact) are formed in accordance with the amount of the distance D, movement of the end portion 14DA in the vertical direction may be restrained.

In the vehicle structure body 10B according to the third exemplary embodiment, because the plate member 20-3 is fastened to each of the upper side flange 14H and lower side flange 14J provided at the front side member 14-3, assembly of the plate member 20-3 to the front side member 14-3 may be made easier.

### = Fourth Exemplary Embodiment =

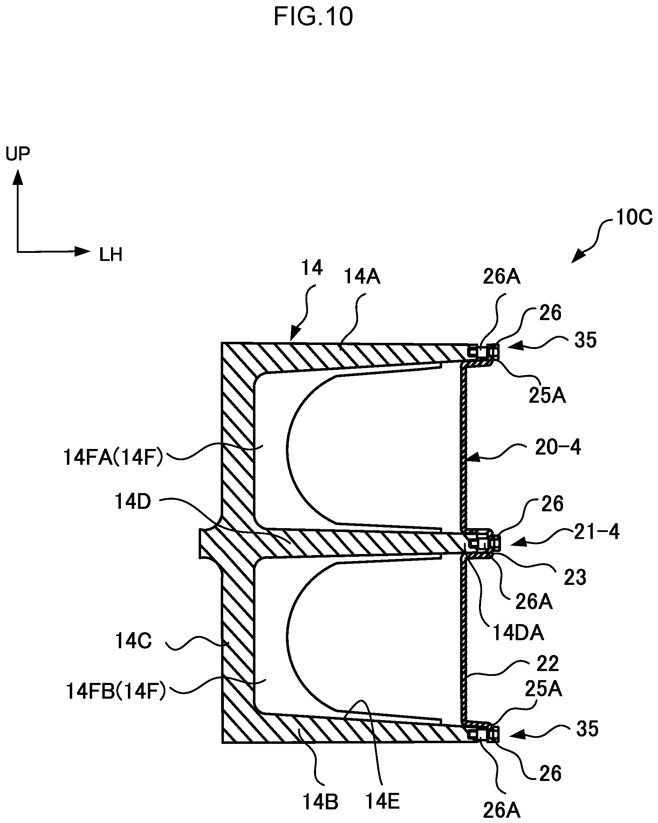

Now, a vehicle structure body 10C according to a fourth exemplary embodiment of the present invention is described. Fig. 10 is a vertical sectional diagram of a front view of the front side member 14 and a plate member 20-4 of the vehicle structure body 10C according to the fourth exemplary embodiment. Structural portions of the vehicle structure body 10C according to the fourth exemplary embodiment that are similar to the above descriptions of the first exemplary embodiment are assigned the same reference symbols and are not described here.

As shown in Fig. 10, the plate member 20-4 according to the fourth exemplary embodiment is provided with fastening portions 35 with a different structure from the fastening portions 25 of the plate member 20 according to the first exemplary embodiment described above. The fastening portions 35 according to the fourth exemplary embodiment are not provided with the upper projection portion 25A and lower projection portion 25B of the fastening portions 25 according to the first exemplary embodiment. Faces of the fastening portions 35 that correspond with the vehicle width direction outer side faces of the upper wall 14A and lower wall 14B function as mounting faces 35A.

**In** the fourth exemplary embodiment, in a state in which bosses 26A are interposed between the vehicle width direction outer side faces of the upper wall 14A and lower wall 14B and the mounting faces 35A, the fastening members 26 that are bolts or the like are employed to fix the mounting faces 35A to the upper wall 14A and lower wall 14B from the vehicle width direction outer side.

At an insertion portion 21-4, in a state in which the bosses 26A are interposed between the vehicle width direction inner side face of the tip portion 23 and the vehicle width direction outer side face of the middle wall 14D, the plate member 20-4 is fastened to the middle wall 14D by being fixed from the vehicle width direction outer side.

### - Operation and Effects -

Now, operation and effects of the fourth exemplary embodiment are described.

**In** the vehicle structure body 10C according to the fourth exemplary embodiment, because the plate member 20-4 is fastened to the middle wall 14D at the insertion portion 21-4, deformation in the vehicle vertical direction of the end portion 14DA at the vehicle width direction outer side of the middle wall 14D may be further restrained.

In the vehicle structure body 10C according to the fourth exemplary embodiment, because the fastening of the plate member 20-4 to the front side member 14 is conducted from the vehicle width direction outer side, assembly of the plate member 20-4 to the front side member 14 may be made easier.

### = Supplementary Descriptions =

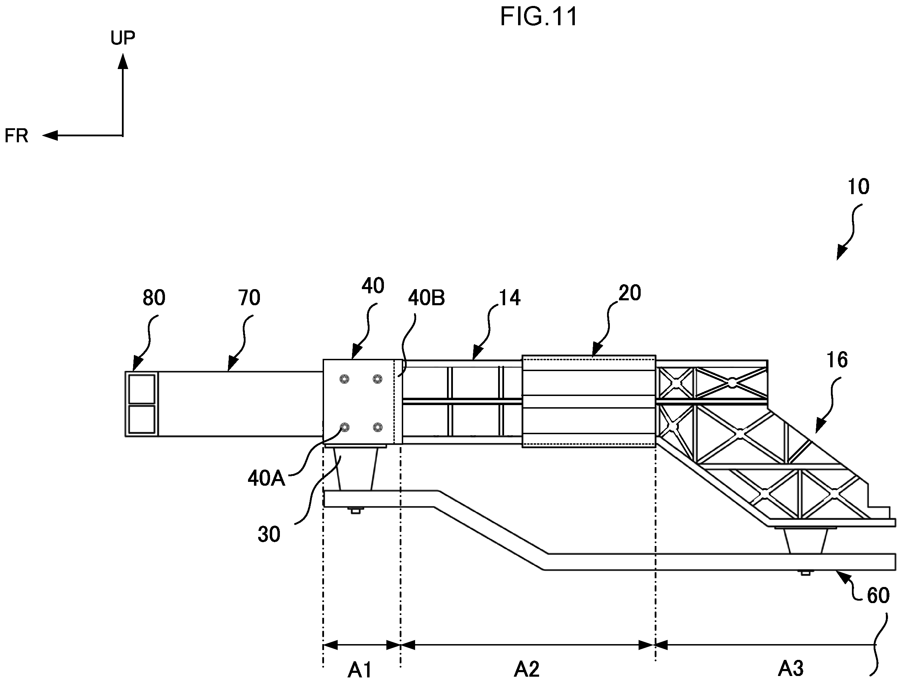

In the exemplary embodiments described above, the plate members 20 and 20-2 to 20-4 are attached so as to cover the whole of the impact absorption region A2 (see Fig. 6), but the present invention is not limited thus. Fig. 11 is a side view, corresponding to Fig. 6, showing a variant example of the mounted state of the plate member 20. As shown in Fig. 11, the plate member 20 covers the front side member 14 to rearward from a vehicle front-and-rear direction central portion of the front side member 14. That is, the plate member 20 is formed along substantially half the length of the front side member 14 in the longer direction of the plate member 20.

Thus, because the plate member 20 covers the front side member 14 to the rear side from the vehicle front-and-rear direction central portion of the front side member 14, loss of shape of the front side member 14 to the rear from the central portion may be suppressed by the plate member 20. Therefore, the front side member 14 at the vehicle front side that is not covered by the plate member 20 is more susceptible to loss of shape than the front side member 14 at the vehicle rear side that is covered by the plate member 20. Therefore, the front side member 14 may be crushed more easily from the front side.

The length of the plate member 20 described above is not limited to substantially half the length. For example, the plate member 20 may cover the front side member 14 to rearward from a position that is to the front or rear of the vehicle width direction central portion of the front side member 14. Similarly to the plate member 20 illustrated in Fig. 11, lengths in the longer direction of the plate members 20-2, 20-3 and 20-4 according to the second to fourth exemplary embodiments may also be altered.

In the exemplary embodiments described above, the front side vehicle structure bodies 10 and 10A to 10C that are mounted at the front side of the vehicle 12 are described as examples of the vehicle structure body, but the present invention is not limited thus. The vehicle structure body of the present invention may also be applied to a rear side vehicle structure body that is mounted at the rear side of the vehicle 12.

The fastening portions 25 according to the first exemplary embodiment described above may be employed for the fastening portions 28, 29 and 35 according to the second to fourth exemplary embodiments. Similarly, the fastening portions 28 according to the second exemplary embodiment, the fastening portions 29 according to the third exemplary embodiment and the fastening portions 35 according to the fourth exemplary embodiment may each be employed in alternative embodiments.

In the exemplary embodiments described above, the front side member 14, 14-2 or 14-3 is open to the vehicle width direction outer side thereof, but the present invention is not limited thus. The front side member may be open to the inner side and may be open to both sides. In other words, the vertical wall 14C may connect between the vehicle width direction inner side end portions of the upper wall 14A, middle wall 14D and lower wall 14B, may connect between the vehicle width direction outer side end portions of the same, and may connect between vehicle width direction middles thereof, in which case the ribs 14F are provided at both sides of the vertical wall 14C in the vehicle width direction. When the front side member is open to both sides, the plate members 20 or 20-2 to 20-4 may be mounted at both sides.

In the exemplary embodiments described above, the front side members 14 are molded integrally with the vehicle framework body 11, but the present invention is not limited thus; just some parts may be molded integrally. More specifically, each connection portion 40 may be formed as a separate body from the vehicle framework body 11, each front side member 14 may be a side member portion that is integrally molded with the vehicle framework body 11, a second front side member (not shown in the drawings) may be formed as a separate body, and the front side members may be joined by the second front side member being interposed between the front side member 14 and the connection portion 40.

Structures of the present invention are not limited by the exemplary embodiments described above; suitably modified structures are applicable as long as the problem of the present invention may be solved.

## Claims

1. A vehicle structure body (10, 10A, 10B, 10C) comprising:
a vehicle framework body (11) that is integrally molded by casting;
a side member portion of which at least a portion is included in the vehicle framework body (11), the side member portion being open to one side of an outer side or an inner side in a vehicle width direction, and the side member portion including:
an upper wall (14A) that extends in the vehicle width direction,
a lower wall (14B) that is provided at a vehicle vertical direction lower side relative to the upper wall (14A) and extends in the vehicle width direction,
a vertical wall (14C) that connects end portions of the upper wall (14A) and the lower wall (14C) at another side in the vehicle width direction,
a middle wall (14D) that is provided between the upper wall (14A) and the lower wall (14B) and that projects from the vertical wall (14C) and extends to the one side in the vehicle width direction,
first ribs (14FA) that are provided between the upper wall (14A) and the middle wall (14D) and are in contact with the upper wall (14A) and the middle wall (14D), and
second ribs (14FB) that are provided between the middle wall (14D) and the lower wall (14B) and are in contact with the middle wall (14D) and the lower wall (14B); and
a plate member (20, 20-2, 20-3, 20-4) fabricated of iron that covers the opening of the side member portion at the one side in the vehicle width direction, the plate member (20, 20-2, 20-3, 20-4) including an insertion portion (21, 21-2, 21-3, 21-4) into which a vehicle width direction end portion of the middle wall (14D) is inserted.

2. The vehicle structure body according to claim 1, wherein the insertion portion includes a recess portion (24) that is open to a side thereof at which the middle wall (14D) is disposed.

3. The vehicle structure body according to claim 1, wherein:
the middle wall (14D) includes a protrusion portion (14G) that protrudes further to the one side in the vehicle width direction than at least one of the upper wall (14A) or the lower wall (14B), and
the insertion portion includes a penetrating hole (27A) into which the protrusion portion (14G) is inserted.

4. The vehicle structure body according to claim 1, wherein:
the plate member includes fastening portions (29) that are fastened to each of the upper wall (14A) and the lower wall (14B); and
the insertion portion includes:
a tip portion (23) that is disposed at substantially a same position in the vehicle width direction as the fastening portions (29) and opposes the vehicle width direction end portion of the middle wall (14D), and
floor portions (32) that are provided at vehicle vertical direction outer sides of the tip portion (23), the floor portions (32) being provided at the other side in the vehicle width direction relative to the fastening portions (29).

5. The vehicle structure body according to claim 2, wherein the plate member is fastened to the middle wall at the insertion portion.

6. The vehicle structure body according to any one of claims 1 to 5, wherein:
the side member portion includes:
an upper side flange (14H) that extends to an upper side in the vehicle vertical direction from an end portion of the upper wall (14A) at the one side in the vehicle vertical direction, and
a lower side flange (14J) that extends to the lower side in the vehicle vertical direction from an end portion of the lower wall (14B) at the one side in the vehicle vertical direction; and
the plate member is fastened to each of the upper side flange (14H) and the lower side flange (14J).

7. The vehicle structure body according to any one of claims 1 to 6, wherein the plate member covers the upper wall, the lower wall and the middle wall from end portions thereof at a vehicle front side to end portions thereof at a vehicle rear side.

8. The vehicle structure body according to any one of claims 1 to 6, wherein the plate member covers the side member portion to rearward from a vehicle front-and-rear direction central portion of the side member portion.
